# EUROPEAN PATENT APPLICATION

(11) **EP 1 087 617 A2**
(43) Date of publication of application: **28.03.2001**
(21) Application number: 00307747.6
(22) Date of filing: 07.09.2000
(51) Int. Cl.: H04N 7/088, H04N 7/24, H04N 5/445

(54) **System for nonlinear viewing of television show segments**

(30) Priority: 21.09.1999 US 154956 P
(71) Applicant: Texas Instruments Incorporated, Dallas, Texas 75251 (US)
(72) Inventor: Middleton, Ryan, Plano, Texas 75093 (US); Thrift, Philip, Dallas, Texas 75243 (US)
(74) Representative: Potter, Julian Mark

(57) **Abstract**

A system for nonlinear viewing of television show segments is provided by transmitting a main signal 11 and an ancillary signal 19. The ancillary signal 19 is a short show segment. The television receiver system 20 can select either the main signal or the ancillary signal. The ancillary signal is stored in a small cache memory 26 for later access in place of the main signal. An icon 28 is generated on the television set to notify the user of the presence of the ancillary signal.

## Description

This invention relates to television systems, and more particularly, but not exclusively, to a television system for non-linear viewing of television show segments.

Television viewing today is linear viewing of transmitted programs. The viewer tunes to a particular channel and the program material, including advertisements, are displayed or recorded (if the viewer has a video tape recorder) in sequence. Television broadcasting includes extensive editing of program material, particularly news broadcasting to fit the programming time constraints so a lot of good material is edited out. It would be highly desirable to enable a viewer to see this material. Video On Demand (VOD) systems require significant dedicated bandwidth and server resources to send selected segments. Receiver storing of high amounts of television and other media content requires huge storage requirements on receiver.

Broadcasters are faced with the high cost of installing High Definition Television Broadcasting Equipment with an unknown number of customers willing to pay the cost for High Definition television sets. It is, therefore, desirable to provide other ways of attracting more viewers.

In accordance with one embodiment of the present invention, a system for selective segment reception of broadcast television and/or caching television content is provided wherein while at a given television channel frequency, a main signal is provided and separate television ancillary data, including television show segment, is provided and the receiver system can either store or provide the ancillary data out of the television receiver to the television display.

Specific embodiments of the invention will now be described by way of example only, and with reference to the accompanying drawings, in which:
FIG. 1 is a block diagram of the system according to one embodiment of the present invention;
FIG. 2 is a block diagram of the system according to a second embodiment of the present invention;
FIG. 3 illustrates transmission in the sidebands according to a second embodiment of the present invention; and
FIG. 4 illustrates switching between high revolution to standard resolution screens at the same time to provide ancillary data.
FIG. 5 illustrates full high definition TV bandwidth and alternate 188 Byte bandwidth, and
FIG. 6 illustrates another embodiment of the present invention using multiplexed channels.

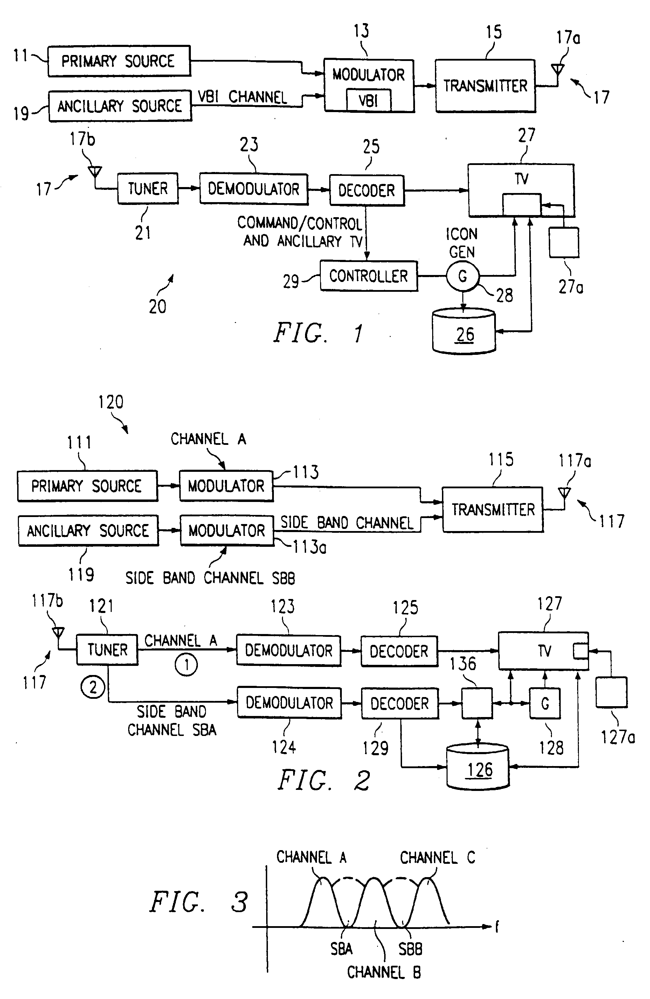

Referring to FIG. 1, the primary television signals from source 11 are modulated at modulator 13 and amplified and broadcasted via transmitter 15 and antenna or cable system 17. An alternate signal source 19, which may be signals including a television video show segment, are modulated at modulator 13 during, for example, the vertical blanking interval (VBI). The signals sent during the vertical blanking interval also includes data to transmit command/control signals for caching the small video segments of content from the auxiliary channel 19 in cache 26, which can include VBI or user data as well as subchannels to the main channel. The VBI signals direct the updating of the cached television content, just keeping in store what is associated with the main television show in a time window. New signals received at receiver 20 via antenna 17a or cable system 17 replace that stored in an earlier time window to clean up the cache 26 and to keep the storage requirement small. At the receiver end, the antenna 17b or cable system and tuner 21 receive the transmitted signals and the main channel signals are sent to demodulator 23 and decoder 25 to the television set with display 27. The command and/or control signals for caching control and the ancillary segment signals are provided out of demodulator 23 and decoder 25 to control 29 and the ancillary channel segment when decoded is selectively stored on disk or other memory cache 26. New signals coming in through demodulator 23 can, in one embodiment, clean-up the cache to keep the storage requirement small. The command/control signals at control 29 control the storage on cache 26. The receiver system via the control 29 can provide a television viewer interface option wherein small icons are generated at a generator 28 that appear on the television display screen 27 overlaid on top of the television show, showing the ancillary television content selectable by the viewer. This can be controlled by the command/control signals at control 29 to store in cache 26 and to generate the icons for the television set. The generator 28 generates the icon when the ancillary content is demodulated and stored in the cache 26. These are removed as content leaves the cache. The viewer has an interactive terminal 27a such as a mouse or keyboard on the television remote to select the icon and access the cache to the screen. The primary source and ancillary sources may encode at an encoder to convert to binary data to be modulated and the decoder 25 converts the signal back to analog signals. One example of the ancillary data is caching simultaneous camera views of a sports event, so the viewer can direct instant replay from a different angle. Another example is caching smaller videos directly related to the main show that are directly coupled in a time neighborhood with the show, *e.g*., Teletubies can have user-profile-based video content.

The present invention in one embodiment utilizes the Vertical Blanking Interval (VBI) to manage the content of the cache of media on the receiver, keeping the cache aligned with the content of the channel being received at the time. When the VBI occurs, the data from the ancillary source is stored with the control by the command/control signals.

The ATVEF (www. atvef.com) specification provides Internet/VBI protocols that will support the implementation; in particular:
- announcements over Session Description Protocol(SDP)
- triggers over User Datagram Protocol(UDP)
can be utilized to transmit the control information for cache management.

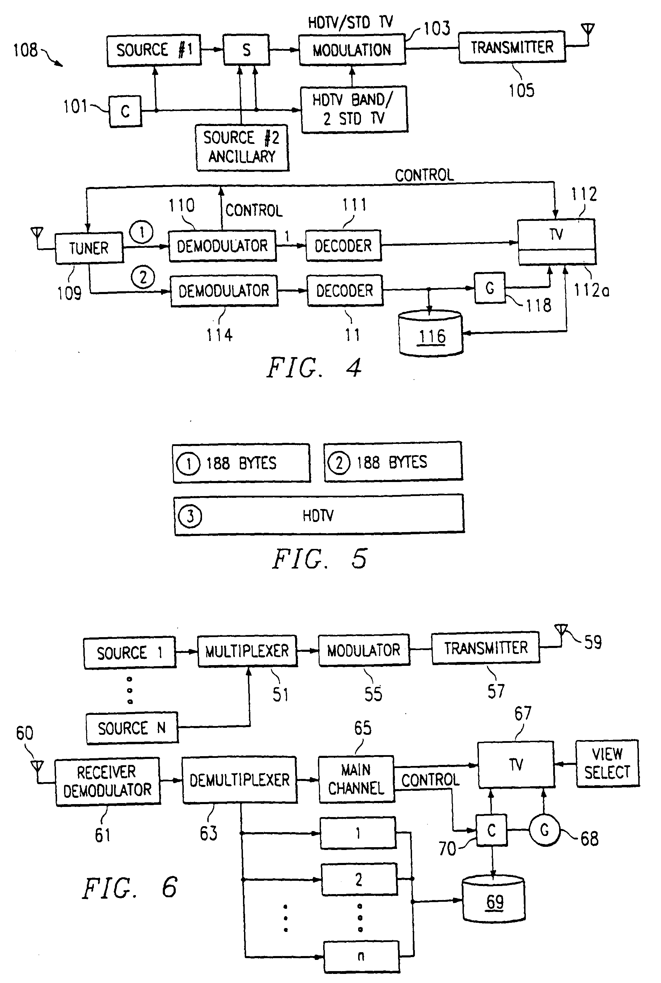

In accordance with another embodiment of the present invention as illustrated in FIG. 2, the main television signal at source 111 is modulated at modulator 113 with a television channel A, for example, and transmitted by transmitter 115 via antenna 117a or cable system 117. The ancillary data at source 119 is modulated at modulator 113a to a digital data sideband carrier signal. Analog signals require sideband isolation between channels since the spectrum from one channel frequency band spills into the adjacent channel frequency bands. When the main channels are sent under data compression such as MPEG1 and MPEG2, they do not require isolation. The main primary source 111 is modulated using a data compressed modulation at modulator 113 such as MPEG1. The ancillary source 19 data and command/control signals are sent between the data compressed MPEG channels, such as between channel A and B, in accordance with this other embodiment. As illustrated in FIG. 3, between the 6 mHz channels A, B and C are sideband channels S.B.A. and S.B.B. normally kept for isolation. The sideband channel carries the ancillary data and command/controls while the primary source is sent using compressed digital data with low spill over. Similar sideband communication system is provided by U.S.A. Digital Radio for radio as described ,for example, in Hunsinger et.al. U.S. Patent No. 5,745,525. This patent is incorporated herein by reference. The receiver 120 receives the main signal at the channel A carrier and provides the main signal through the tuner 121 to the demodulator 123 and decoder 125 to the television set 127. The sideband channel SBA is coupled out of port 2 to demodulator 124. At decoder 129 are detected the command and control signals that are used to store the ancillary signal at cache storage 126 under control of controller 129. Controller 136 controls the sideband signals stored in cache storage 126 and input into the television set 127. An icon generator 128 is responsive to the storage of the selected sideband channel in cache 126 to provide an icon on the display screen of television set 127 for selection by selection control 127a to select the stored cache signal sent on the sideband channel in place of the main signal. The decoder 125 also converts when applicable digital signals to an analog for the television set 127.

In accordance with another embodiment as shown in FIG. 4, one high definition television channel can be split by a control 101 into two channels (source #1 and source #2) with each carrying, for example, half high definition television information. The modulator 103 receives two adjacent standard carrier frequency signals or one high definition carrier signal for modulation and transmitter 105 transmits over either the high definition channel frequency band or two adjacent lower or standard frequency bands. High definition signals from source #1 can be switched at switch S so source #1 is switched to reduce the bandwidth, for example, in half and also add an adjacent channel source #2 at adjacent frequency band and command/controls at reduced bandwidth within the high definition band. At the receiver 108, the tuner 109 is switched to the two channel modes such that the demodulator 110 converts the half band signals and provides source #1, for example, to the TV receiver 112 through decoder 111. The ancillary channel (source #2 for the example) and command/control is provided at port 2 to demodulator 114. The decoders convert digital signals to analog and decoder 115 detects and provides the necessary command/control signals and includes the controller. The controller provides the control signals to perform the storage and erase functions (memory control) and signal to icon generator 118. The interactive user selects the ancillary programs by selector 112a. The output is either stored in cache 116 or switched to TV 112. During program content such as news, two programs can be sent over the single high definition channel with each 188 Bytes with a first set of 188 Bytes sending, for example, the main program (for example, source #1) and the second set of 188 Bytes sending the ancillary data of, for example, more detail about a segment of the news program. For example, when a main program leaves a segment on Kosovo and goes on to discuss the weather and the viewer wants more information on Kosovo, the viewer can select to receive an ancillary program on Kosovo or store the ancillary program segment on Kosovo in the cache disk 116.

Referring to FIG. 5, the standard resolution digital broadcast for television, is 188 Bytes and fits in the bandwidth of half the high resolution television bandwidth. The system can select to transmit, for example, full high resolution program material for sports events, for example, but switch to lower resolution for selected segments of news broadcasts so viewer can select ancillary data such as more on Kosovo or alternate views of a replay of the sports event. The alternate 188 Bytes is represented by selections 1 and 2 and selection 3 represents the high definition broadcast.

In accordance with another embodiment of the present invention as illustrated in FIG. 6 a television channel is split into several subchannels of time multiplexed signals. The main subchannel can be viewed with subchannels cached in the system. Control data embedded in the main subchannel provides commands for updating (removing old subchannel segments and storing new ones). The cached subchannels may be selected by the viewer to see additional video associated with the main subchannel, such as a different perspective of a football game. Referring to FIG. 6, the n sources are time multiplexed at multiplexer 51 with source 1 (main channel) on most of the time and only short segments provided the other sources. The signals are modulated at modulator 55 and transmitted via transmitter 51 and antenna or cable 59. The received signal at antenna or cable end 60 is demodulated at demodulator 61 and applied to de-multiplexer 63. The main signal from source 1 is provided to the television set 67 via channel 65 and the separate time spaced channels are stored in separate cache memories on disk 69 or on separate RAM memories. The storage of the signals from the sources 2 through n at the separate cache memories is indicated by the generation of icons at generator 68. The command/control is provided from the main channel signals to controller 70 that controls the storage, icon generation and access. When the viewer selects a stored segment by a keyboard entry or mouse click on the icon, the controller 709 fetches the proper cache location. The cache stores only the most recent data information and overwrites the old.

The command and control signals in the embodiment can be sent in the main channel or any other channel.

In view of the foregoing description it will be evident to a person skilled in the art that various modifications may be made within the scope of the invention.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described above are implementable, at least in part, using a software-controlled programmable processing device such as a Digital Signal Processor, microprocessor, other processing devices, data processing apparatus or computer system, it will be appreciated that a computer program for configuring a programmable device, apparatus or system to implement the foregoing described methods is envisaged as an aspect of the present invention. The computer program may be embodied as source code and undergo compilation for implementation on a processing device, apparatus or system, or may be embodied as object code. The skilled person would readily understand that the term computer in its most general sense encompasses programmable devices such as referred to above, and data processing apparatus and computer systems.

Suitably, the computer program is stored on a carrier medium in machine or device readable form, for example in solid-state memory or magnetic memory such as disc or tape and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

## Claims

1. A system for nonlinear viewing of television segments comprising:
a television broadcast transmitter including means for generating and transmitting main television signals and separate ancillary television signals said related to said main signals;
a television receiver system for receiving said main signals and for storing in a cache memory the ancillary signals, and
selective means at the television receiver for providing either the main signals or the ancillary signals to the television display.

2. The system of Claim 1 including means for generating an icon on a television receiver display indicating the presence of the stored ancillary signals and means at the television receiver for accessing said stored ancillary signal in said cache memory using said icon.

3. The system of claim 1 or 2, wherein said ancillary signal is broadcasted in the vertical blanking interval of the main signal and said receiver receives the ancillary signal during the vertical blanking interval.

4. The system of any preceding claim, wherein said television signals are transmitted over a digital television channel subdivided into several subchannels of multiplexed signals and wherein one of said subchannels contains said main television signals and the other subchannels provide the ancillary signals.

5. The system of Claim 4 wherein said main subchannel carries the control data for commands for updating by removing old subchannel segments and storing new ones.

6. The system of any preceding claim, wherein said separate ancillary signal contains short television signal segments related to the main signals and said cache stores said segments and said main signals and contains control data providing means for removing and storing said segments and said receiver system includes means for responsive to said control data for storing and removing said short segments from said cache memory.

7. The system of any preceding claim, wherein said ancillary signals include ancillary data and command and control signals.

8. The system of Claim 7 wherein said main signals are data compressed signals and the ancillary signals are in the sideband channels between said main signals.

9. The system of any one of claims 1 to 7, wherein said main signals are data compressed segments and the ancillary signals are in the sidebands between said main signals.

10. The system of any one of claims 1 to 7, wherein said main signals and ancillary signals are different parts of a high definition television channel.

11. The system of Claim 10 including means for switching between high definition television channel and one standard television subchannel and an ancillary subchannel.

12. A method for non-linear viewing of television signals in a television signal including main television signals and separate ancillary television signals related to said main signals, the method comprising:
receiving said main television signals;
storing said ancillary signals in a cache memory; and
selectively providing either the main signals or the ancillary signals to the television display.

13. A computer program comprising computer or machine-readable program means for implementing the method of claim 12 in a computer.

14. A computer program comprising computer or machine-readable program means translatable for implementing the method of claim 12 in a computer.
